# EUROPEAN PATENT APPLICATION

(11) **EP 4 650 771 A1**
(43) Date of publication of application: **19.11.2025**
(21) Application number: 23916171.4
(22) Date of filing: 01.12.2023
(51) Int. Cl.: G01N 30/54

(54) **LIQUID CHROMATOGRAPH DEVICE**

(30) Priority: 10.01.2023 JP 2023001572
(71) Applicant: HITACHI HIGH-TECH CORPORATION, Tokyo 105-6409 (JP)
(72) Inventor: SHIMIZU, Yusuke, Tokyo 105-6409 (JP); HASHIMOTO, Yuichiro, Tokyo 105-6409 (JP); IIJIMA, Yu, Tokyo 105-6409 (JP); SEKIYA, Kazuma, Tokyo 105-6409 (JP); YAMAMURA, Shuhei, Tokyo 105-6409 (JP)
(74) Representative: MERH-IP Matias Erny Reichl Hoffmann Patentanwälte PartG mbB
(86) International application number: PCT/JP2023/043117
(87) International publication number: WO 2024/150555

(57) **Abstract**

There is provided a liquid chromatograph that is capable of accurately managing and controlling the temperature of an analysis column while suppressing an increase in environmental loads. This liquid chromatograph device includes a column cartridge including a column-side heat block configured to transfer heat to an analysis column, and a main body configured to mount the column cartridge, the main body including a column oven-side heat block configured to be brought into contact with the column-side heat block to transfer heat to the column-side heat block. The main body includes a first temperature sensor that measures a temperature of the column oven-side heat block, a second temperature sensor that measures a temperature of an inside of the column cartridge, and a determining unit that determines whether the column oven-side heat block is in contact with the column-side heat block according to a measured result of the first temperature sensor and a measured result of the second temperature sensor.

## Description

### Technical Field

The present invention relates to a liquid chromatograph device.

### Background Art

A liquid chromatograph device is known as an analyzer for analyzing a substance contained in a sample. In a liquid chromatograph, a liquid mobile phase is pressurized by such as a pump and passed through an analysis column to separate and detect substances to be analyzed with high performance using a difference in interaction between a stationary phase and the mobile phase.

In liquid chromatograph, liquid delivery and temperature conditions are set for each substance to be analyzed, and separation and detection of the substance to be analyzed are performed by controlling each unit under the set conditions. In liquid chromatograph, it is important to control temperature of the analysis column to be at the set temperature condition, therefore, the liquid chromatograph device includes a column oven for temperature control.

However, in a column oven of a conventional liquid chromatograph device, a temperature of the analysis column is adjusted in a constant temperature atmosphere, therefore, the temperature of the analysis column cannot be accurately measured or estimated. The analysis column is a component that requires replacement, and it is difficult to attach a temperature sensor to the analysis column.

A liquid chromatograph device in which a sensor and a heater are mounted on the analysis column itself, as a consumable, is also known, for example, from Patent Literature 1 and 2. However, if a sensor or heater is mounted on the analysis column itself, when the analysis column needs to be replaced due to performance degradation or clogging, the sensor or heater mounted on the analysis column must also be discarded, which increases environmental loads.

### Citation List

### Patent Literature

Patent Literature 1: Japanese Unexamined Patent Application Publication No. 2014-157139
Patent Literature 2: Japanese Unexamined Patent Application Publication No. 2013-195392

### Summary of Invention

### Technical Problem

In the present invention, there is provided a liquid chromatograph that is capable of accurately managing and controlling the temperature of an analysis column while suppressing an increase in environmental loads.

### Solution to Problem

A liquid chromatograph device of the present invention includes: a column cartridge configured to mount an analysis column, the column cartridge including a column-side heat block configured to transfer heat to the analysis column; and a main body configured to mount the column cartridge, the main body including a column oven-side heat block configured to be brought into contact with the column-side heat block to transfer heat to the column-side heat block.

The main body includes a first temperature sensor that measures a temperature of the column oven-side heat block, a second temperature sensor that measures a temperature of an inside of the column cartridge, and a determining unit that determines whether the column oven-side heat block is in contact with the column-side heat block according to a measured result of the first temperature sensor and a measured result of the second temperature sensor.

### Advantageous Effects of Invention

According to the present invention, it is possible to provide a liquid chromatograph that is capable of accurately managing and controlling the temperature of an analysis column while suppressing an increase in environmental loads.

### Brief Description of Drawings

FIG. 1 is a schematic diagram illustrating the overall structure of a liquid chromatograph device 100 according to a first embodiment.
FIG. 2 is a schematic perspective view illustrating an example structure of a column cartridge 1.
FIG. 3 is a perspective view showing an example structure of the top surface of the column cartridge 1.
FIG. 4 is a perspective view showing an example structure of the bottom surface of the column cartridge 1.
FIG. 5 is a cross-sectional view illustrating the detail of the structure of the column cartridge 1 and the detail of the structure of a main body 50.
FIG. 6 is a cross-sectional view illustrating the configuration of a liquid chromatograph device 100 according to a second embodiment.
FIG. 7 is a cross-sectional view illustrating the configuration of the liquid chromatograph device 100 according to a third embodiment. Description of Embodiments

Embodiments of the invention will now be described with reference to the drawings. In the drawings, functionally identical elements may be represented by the same numerals. The drawings show embodiments and implementation examples according to the principles of the disclosure, which are intended to understand the disclosure and are in no way to be used to restrictedly interpret the disclosure. The descriptions herein are merely typical examples and are not intended to limit the claims or applications of the disclosure in any way.

Although the embodiment has been described in sufficient detail to enable those skilled in the art to practice the disclosure, it should be understood that other implementations and configurations are possible, and that changes in structure and substitution of various elements are possible without departing from the scope and spirit of the technical idea of the present disclosure. Therefore, the following description should not be construed as being limited to this.

### First Embodiment

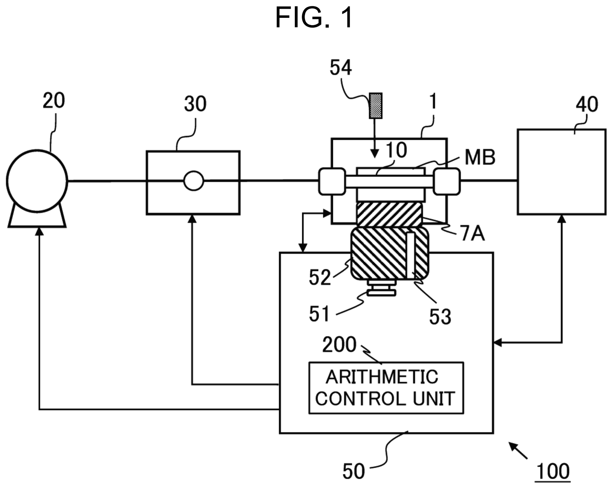

The overall structure of a liquid chromatograph device 100 according to a first embodiment will be described with reference to FIG 1. As an example, the liquid chromatograph device 100 is configured to include a column cartridge 1, an analysis column 10, a liquid delivery pump 20, an injector 30, a detection unit 40, and a main body 50. The liquid delivery pump 20, the injector 30, the column cartridge 1, and the detection unit 40 are connected by piping.

The liquid delivery pump 20 is located at an uppermost stream end of an analysis flow path, and has a function to pump the mobile phase from a container (not shown) accommodating the mobile phase to deliver to the injector 30. The injector 30 has a role of aspirating a sample from a sample container accommodating the sample using, for example, a probe, and injecting the aspirated sample into the analysis column 10 installed in the column cartridge 1.

The column cartridge 1 is a container configured to mount and accommodate the analysis column 10. The column cartridge 1 is configured so that the analysis column 10 can be fixed to a housing of the column cartridge 1 by a metal block MB. The metal block MB has a column-side heat block 7A below it. The column-side heat block 7A is configured so that it can be exposed outside through a bottom hole of the column cartridge 1.

The detection unit 40 analyzes the mobile phase discharged from the analysis column 10 to perform an analysis of trace substance to be detected. The main body 50 includes an arithmetic control unit 200. The arithmetic control unit 200 performs various calculations related to the substance to be analyzed according to signals from the detection unit 40, etc., and outputs control signals to control the liquid delivery pump 20, the injector 30, and the detection unit 40.

The main body 50 also includes a column oven that generates heat to be applied to the aforementioned column-side heat block 7A. The column oven is a mechanism for generating heat to control a temperature of the analysis column 10 at a constant, for example, is substantially composed of a heater 51 and a column oven-side heat block 52. The column oven-side heat block 52 is configured to be contact with a lower surface of the aforementioned column-side heat block 7A. A heater 51 is connected to, for example, a lower surface of the column oven-side heat block 52, the heater 51 is activated to generate heat, then transfers heat to the column oven-side heat block 52.

The liquid chromatograph device 100 includes a first temperature sensor 53 and a second temperature sensor 54 as temperature sensors for measuring the temperature of the analysis column 10. The first temperature sensor 53 is embedded in the aforementioned column oven-side heat block 52, measuring a temperature of the column oven-side heat block 52. Whereas, the second temperature sensor 54 is arranged and configured to measure a temperature inside the column cartridge 1, for example, a temperature of the metal block MB. As an example, the second temperature sensor 54 can be configured to measure the temperature through a window provided in the column cartridge 1.

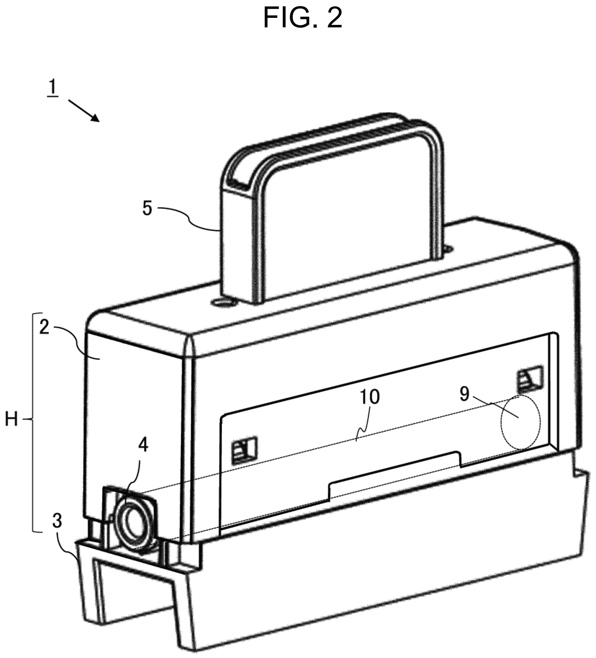

An example structure of the column cartridge 1 will be described with reference to a schematic perspective view of FIG 2. As shown in FIG. 2, the column cartridge 1 includes a housing upper part 2 made of resin and a housing lower part 3 made of resin. The housing upper part 2 and the housing lower part 3 form a housing H that accommodates an analysis column 10 therein. That is, the housing upper part 2 is provided above the analysis column 10, while the housing lower part 3 is provided below the analysis column 10, and the analysis column 10 is accommodated inside the housing H formed by the two. As mentioned later, the analysis column 10 is fixed within the housing H by the metal block MB.

A handgrip (protrusion) 5 is formed on the top surface of the housing upper part 2. On a side of the housing between the housing upper part 2 and the housing lower part 3, a first passage port 4 is formed as one end of the analysis column 10, and the analysis column 10 is held in the housing H in a form where the first passage port 4 is exposed from the housing H. The mobile phase flows toward the first passage port 4. A second passage port 9 is formed on the opposite side of the housing H as the other end of the analysis column 10, and the analysis column 10 is similarly held within the housing H so that the second passage port 9 is exposed outside from the housing H.

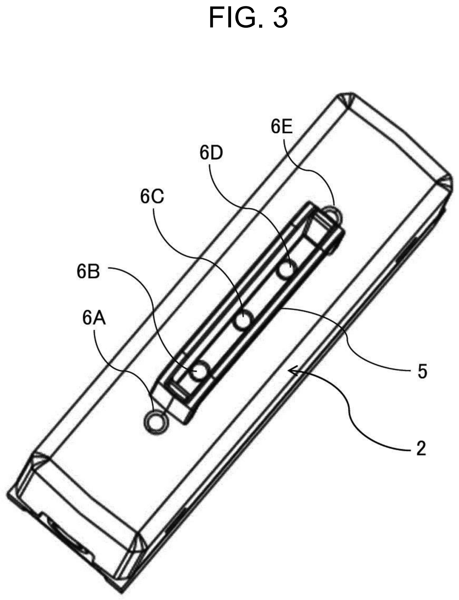

An example structure of the top surface of the column cartridge 1 is shown with reference to a perspective view of FIG. 3. The upper surface of the housing upper part 2 is provided with temperature detection windows 6A, 6B, 6C, 6D and 6E. These windows 6A to 6E are connected to a housing space of the analysis column 10. The windows 6A, 6B, 6C, 6D and 6E are arranged along a longitudinal direction of the analysis column 10. In FIG. 3, some windows, the windows 6B, 6C, and 6D are formed where the handgrip 5 is formed, while the other windows 6A and 6E are arranged outside the handgrip 5 (on the longitudinal extension), but this is an example and is not limited to those shown. A diameter of the windows 6A, 6B, 6C, 6D and 6E is preferably about 1.4 mm or less.

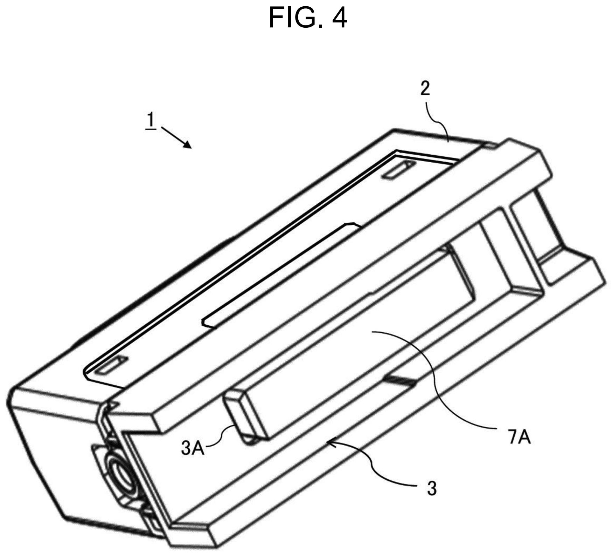

FIG. 4 shows an example structure of a bottom surface of the column cartridge 1. An opening 3A is formed in a bottom surface of the housing lower part 3. A column-side heat block 7A of a metal block lower part 7, which will be mentioned later, is inserted into the opening 3A, the column-side heat block 7A is exposed outside from the opening 3A. The column-side heat block 7A is in contact with the column oven-side heat block 52 to receive heat from the column oven and transfer the heat to the analysis column 10.

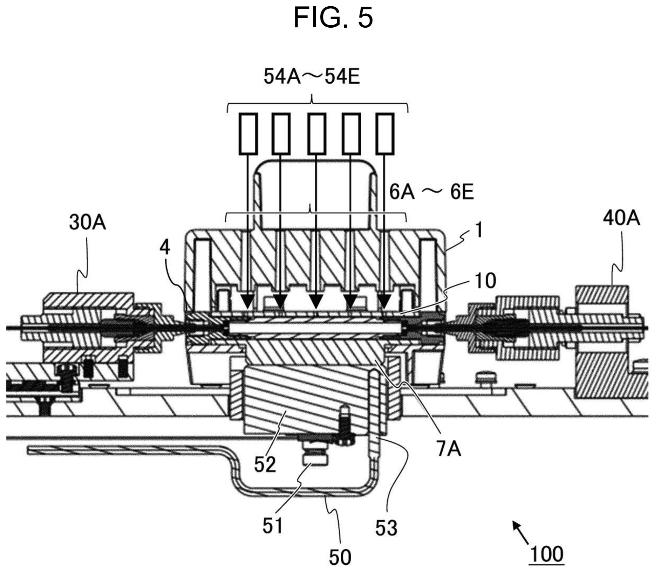

Details of a structure of the column cartridge 1 and a structure of the main body 50 will be described with reference to FIG 5. As mentioned above, the column cartridge 1 includes the windows 6A to 6E that reach from the top surface to the metal block MB for temperature detection, through which infrared rays are irradiated from infrared temperature sensors 54A to 54E, which is an example of the second temperature sensor 54, and a reflected light is detected. The infrared temperature sensors 54A to 54E are arranged not inside but outside the column cartridge 1, forming part of the main body 50.

The analysis column 10 fitted in the column cartridge 1 is connected to a guide block 30A and a guide block 40A at the first passage port 4 and the second passage port 9, respectively. The guide block 30A and the guide block 40A are mounted on a guide rail (not shown) that extends in a horizontal direction of the paper, and are configured to be movable along the horizontal direction of the paper. The analysis column 10 is connected to the aforementioned injector 30 and detection unit 40 via the guide blocks 30A and 40A, respectively.

Detection signals of the first temperature sensor 53 and the second temperature sensor 54 are input to the arithmetic control unit 200, where the temperature of the analysis column 10 is estimated. The arithmetic control unit 200 determines whether the column-side heat block 7A and the column oven- side heat block 52 are in proper contact with each other based on a difference between the detection signals of the first temperature sensor 53 and the second temperature sensor 54. That is, the arithmetic control unit 200 functions as a determining unit that determines whether or not the two heat blocks 7A and 52 are in proper contact with each other based on the differences in the detection signals of the temperature sensors 53 and 54A to 54E.

If the heat blocks 7A and 52 are in proper contact with each other, a heat of the column oven-side heat block 52 is transferred to the column-side heat block 7A, therefore no large temperature difference occurs between the two. Whereas, if the heat blocks 7A and 52 are not in proper contact with each other, the heat of the column oven-side heat block 52 will not be sufficiently transferred to the column-side heat block 7A, therefore the temperature of the column-side heat block 7A is significantly lower than the temperature of the column oven-side heat block 52. The arithmetic control unit 200 can determine whether or not proper contact is made between both the heat blocks based on the temperature difference.

As mentioned above, according to the first embodiment of the liquid chromatograph device 100, the column cartridge 1 including the column-side heat block 7A is mounted on the main body 50, and the column oven-side heat block 52 of the main body 50 is arranged to be in contact with the column-side heat block 7A. The temperature of the analysis column 10 is measured by the first temperature sensor 53 mounted on the column oven-side heat block 52 and the second temperature sensors 54A to 54E that measure the temperature of the column cartridge 1, and it is also possible to determine whether or not proper contact is made between the heat blocks 7A and 52. Since both of the temperature sensors 53 and 54 are provided on the main body 50 side, according to the embodiment, it is possible to provide the liquid chromatograph that is capable of accurately managing and controlling the temperature of the analysis column while suppressing an increase in the environmental loads.

### Second Embodiment

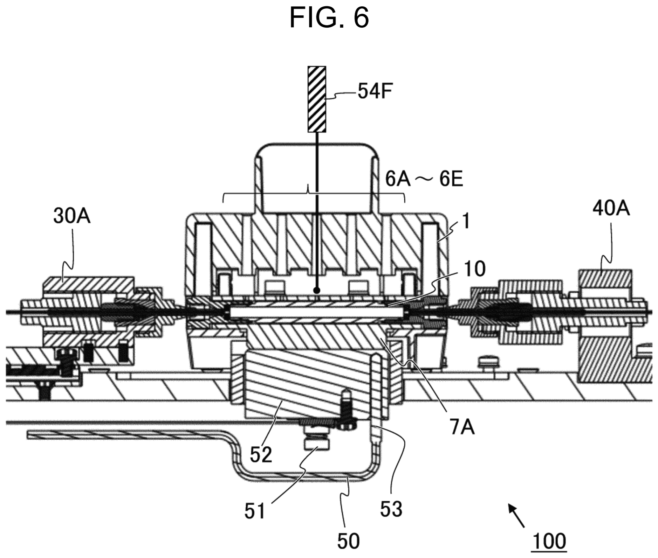

Next, a liquid chromatograph device 100 according to a second embodiment will be described with reference to FIG 6. The liquid chromatograph device 100 according to the second embodiment is similar to the first embodiment in its overall configuration and the structure of the column cartridge 1 (FIGS. 1 to 4), a duplicated description will be omitted. The second embodiment differs from the first embodiment in that the second temperature sensor 54 is a probe-type temperature sensor 54F provided with a contact-type probe.

The probe-type temperature sensor 54F includes a contact-type probe that can be inserted into the windows 6A to 6E, and can measure the temperature of the analysis column 10 by bringing the contact-type probe into contact with, for example, the metal block MB. It is also possible to provide a plurality of probe-type temperature sensors 54F in accordance with the number of windows 6A to 6E.

As mentioned above, according to the liquid chromatograph device 100 in the second embodiment, as in the first embodiment, it is possible to provide a liquid chromatograph that is capable of accurately managing and controlling the temperature of the analysis column while suppressing an increase in the environmental loads.

### Third Embodiment

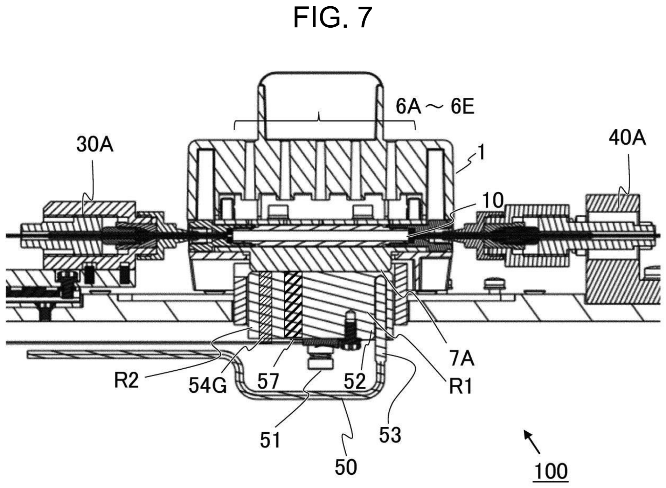

Next, a liquid chromatograph device 100 according to a third embodiment will be described with reference to FIG 7. The liquid chromatograph device 100 according to the second embodiment is similar to the first embodiment in its overall configuration and the structure of the column cartridge 1 (FIGS. 1 to 4), a duplicated description will be omitted. The third embodiment differs from the first embodiment in that the second temperature sensor 54G is embedded in the column oven-side heat block 52 and arranged to reach the column-side heat block 7A.

According to the third embodiment, the column oven-side heat block 52 thermally separates a first section R1 from a second section R2 by an insulation member 57. The heater 51 is brought into contact with the first section R1 to transfer heat only to the first section R1 and not to the second section R2. Whereas, the aforementioned second temperature sensor 54G is embedded in the second section R2, exposed at a surface thereof, and in contact or proximity with the column-side heat block 7A.

In this configuration, in a state where the column-side heat block 7A and the column oven-side heat block 52 are in proper contact with each other, a heat from the heater 51 is first transferred to the first section R1 of the column oven-side heat block 52 (the first section R1 is heated), then transferred to the column-side heat block 7A, and further is transferred to the second section R2. Therefore, no significant temperature difference occurs between the first and second sections R1 and R2. The temperature difference is detected by the second temperature sensor 54G and the first temperature sensor 53.

Whereas, in a state where the column-side heat block 7A and the column oven-side heat block 52 are not in proper contact with each other, the heat transferred from the heater 51 to the first section R1 of the column oven-side heat block 52 is not transferred sufficiently to the column-side heat block 7A, thus the heat is also not transferred sufficiently to the second section R2. Therefore, the temperature difference between the first and second sections R1 and R2 increases, which is detected by the second temperature sensor 54G and the first temperature sensor 53.

According to the third embodiment, the temperature sensors 53 and 54G are both provided in the column oven-side heat block 52, so even if the analysis column 10 is replaced, there is no need to replace the temperature sensors 53 and 54G, an increase in the environmental loads is suppressed. Therefore, according to the liquid chromatograph device 100 in the third embodiment, as in the first embodiment, it is possible to provide the liquid chromatograph that is capable of accurately managing and controlling the temperature of the analysis column while suppressing an increase in the environmental loads.

It should be noted that the present invention is not limited to the embodiments described above, and includes various modification examples. For example, the above-described embodiments have been described in detail in order to facilitate the understanding of the present invention, and the present invention is not necessarily limited to those including all of the described configurations. In addition, part of the configuration of one embodiment can be replaced with the configurations of other embodiments. In addition, the configuration of the one embodiment can also be added with the configurations of other embodiments. In addition, part of the configuration of each of the embodiments can be subjected to addition, deletion, and replacement with respect to other configurations.

### List of Reference Signs

1: column cartridge
2: housing upper part,
3: housing lower part,
3A: opening,
H: housing,
4: first passage port,
5: handgrip,
6A to 6E: window,
7A: column-side heat block
MB: metal block,
9: second passage port,
10: analysis column,
20: liquid delivery pump,
30: injector
40: detection unit,
50: main body,
51: heater,
52: column oven-side heat block,
53: first temperature sensor,
54, 54A to 54G: second temperature sensor,
200: arithmetic control unit

## Claims

1. A liquid chromatograph device comprising:
a column cartridge configured to mount an analysis column, the column cartridge including a column-side heat block configured to transfer heat to the analysis column; and
a main body configured to mount the column cartridge, the main body including a column oven-side heat block configured to be brought into contact with the column-side heat block to transfer heat to the column-side heat block,
wherein the main body includes
a first temperature sensor that measures a temperature of the column oven-side heat block,
a second temperature sensor that measures a temperature of an inside of the column cartridge, and
a determining unit that determines whether the column oven-side heat block is in contact with the column-side heat block according to a measured result of the first temperature sensor and a measured result of the second temperature sensor.

2. The liquid chromatograph device according to claim 1,
wherein: the column cartridge includes a window that reaches a vicinity of the analysis column from a surface of the column cartridge to; and
the second temperature sensor measures a temperature in the inside of the column cartridge through the window.

3. The liquid chromatograph device according to claim 2,
wherein the second temperature sensor is an infrared temperature sensor that applies light from the window to measure a temperature in the inside of in the inside of the column cartridge based on reflected light of the light.

4. The liquid chromatograph device according to claim 2,
wherein the second temperature sensor is a probe type temperature sensor including a probe that is inserted from the window to reach the vicinity of the analysis column.

5. The liquid chromatograph device according to claim 1, further comprising
an insulation member that thermally separates a first section from a second section of the column-side heat block,
wherein: the first section is heated by a heater;
the first temperature sensor measures a temperature of the first section;
the second temperature sensor is provided on the second section, and the second temperature sensor is configured to be brought into contact with or brought close to the column-side heat block.

6. A liquid chromatograph device comprising
a column oven-side heat block configured to mount a column cartridge, the column cartridge including a column-side heat block configured to mount an analysis column, the column-side heat block being configured to transfer heat to the analysis column, the column oven-side heat block being configured to be brought into contact with the column-side heat block to transfer heat to the column-side heat block;
a first temperature sensor that measures a temperature of the column oven-side heat block;
a second temperature sensor that measures a temperature in an inside of the column cartridge; and
a determining unit that determines whether the column oven-side heat block is in contact with the column-side heat block according to a measured result of the first temperature sensor and a measured result of the second temperature sensor.

7. The liquid chromatograph device according to claim 6,
wherein: the column cartridge includes a window that reaches a vicinity of the analysis column from a surface of the column cartridge; and
the second temperature sensor measures a temperature in the inside of the column cartridge through the window.

8. The liquid chromatograph device according to claim 7,
wherein the second temperature sensor is an infrared temperature sensor that applies light from the window to measure a temperature in the inside of the column cartridge based on reflected light of the light.

9. The liquid chromatograph device according to claim 7,
wherein the second temperature sensor is a probe type temperature sensor including a probe that is inserted from the window to reach the vicinity of the analysis column.

10. The liquid chromatograph device according to claim 6, further comprising
an insulation member that thermally separates a first section from a second section of the column-side heat block,
wherein: the first section is heated by a heater;
the first temperature sensor measures a temperature of the first section; and
the second temperature sensor is provided on the second section, and the second temperature sensor is configured to be brought into contact with or brought close to the column-side heat block.
